# EUROPÄISCHE PATENTSCHRIFT

(11) **EP 2 250 083 B1**
(45) Veröffentlichungstag und Bekanntmachung des Hinweises auf die Patenterteilung: **04.06.2014**
(21) Anmeldenummer: 08864921.5
(22) Anmeldetag: 22.12.2008
(51) Int. Cl.: B64C 21/02, B64C 3/50, B64C 9/22

(54) **HOCHAUFTRIEBSSYSTEM FÜR EIN FLUGZEUG MIT EINEM HAUPTFLÜGEL UND EINEM VERSTELLBAREN VORFLÜGEL**
LIFT SYSTEM FOR AN AIRCRAFT COMPRISING A MAIN WING AND AN ADJUSTABLE SLAT
SYSTÈME HYPERSUSTENTATEUR POUR UN AVION DOTÉ D'UNE AILE PRINCIPALE ET D'UN VOLET DE BORD D'ATTAQUE RÉGLABLE

(30) Priorität: 20.12.2007 US 15217; 20.12.2007 DE 102007061590
(43) Veröffentlichungstag der Anmeldung: 17.11.2010
(73) Patentinhaber: Airbus Operations GmbH, 21129 Hamburg (DE)
(72) Erfinder: KNACKE, Thilo, 12249 Berlin (DE); THIELE, Frank, 14163 Berlin (DE)
(74) Vertreter: UEXKÜLL & STOLBERG
(86) Internationale Anmeldenummer: PCT/EP2008/011042
(87) Internationale Veröffentlichungsnummer: WO 2009/080355

(56) Entgegenhaltungen:
- EP-A- 0 230 684
- DE-C- 746 714
- US-A- 3 363 859
- US-A- 3 917 193
- US-A- 4 285 482
- US-A1- 2007 034 746
- US-B1- 6 454 219

## Beschreibung

Die Erfindung betrifft ein Hochauftriebssystem für ein Flugzeug mit einem Hauptflügel und einem mittels einer Verstellvorrichtung gegenüber diesem in verschiedene Verstellzustände verstellbaren Vorflügel, das eine Vorrichtung zur Beeinflussung der Strömung aufweist. Mit der Vorrichtung zur Beeinflussung der Strömung wird insbesondere die Minderung des aerodynamischen Lärms an Vorflügeln von Flugzeugen erreicht.

Dokumente US 3 363 859 A, EP 0 230 684 A and DE 746 714 C beschreiben ein Hochauftriebssystem für ein Flugzeug mit einem Hauptflügel und einem mittels einer Verstellvorrichtung gegenüber diesem in verschiedene Verstellzustände verstellbaren Vorflügel, zwischen dessen dem Hauptflügel zugewandten Rückseite und dem Hauptflügel sich ein Spalt ergibt, wobei an der Rückseite ein Luftauslass ausgebildet ist.

Das Dokument US 2007/0034746 A1 beschreibt einen Flügel mit einem Hauptflügel, einem Slat und einer Hinterkantenklappe, die jeweils sowohl Öffnungen zum Einsaugen als auch Öffnungen zum Ausblasen von Luft aufweisen, die jeweils fluidkommunizierend miteinander verbunden sind.

Um bei Start und Landung genügend Auftriebskraft liefern zu können, verfügen die Tragflächen moderner Flugzeuge meist über variable Hochauftriebshilfen (Vorflügel und Klappen), durch deren Ausfahren die Anpassung einer für den Reiseflug optimierten Basisgeometrie an geringe Fluggeschwindigkeiten erfolgt. In ausgefahrenem Zustand besteht zwischen Vor- und Hauptflügel ein Spalt, durch welchen die Luft beschleunigt wird und unter beträchtlicher Schallemission von der Druckseite des Flügels auf dessen Saugseite gelangt. In der Umströmung der auftriebserzeugenden Flächen ist heutzutage eine wesentliche Ursache für die Lärmentwicklung von Flugzeugen im Landeanflug zu sehen.

Durch die Vorflügelumströmung entsteht ein Rezirkulationsgebiet, welches zum einen von der Vorflügeldruckseite in Form einer Hohlkehle berandet und zum anderen von der schnellen Spaltströmung durch eine freie Scherschicht getrennt wird. Instabilitäten dieser freien Scherschicht führen zur Bildung diskreter Wirbelstrukturen, welche dann kontinuierlich entlang einer (fiktiven) Trennstromlinie in Richtung eines zweiten Staupunkts auf der Vorflügelunterseite transportiert werden. An dieser Stelle teilt sich die Strömung auf, und die Wirbelstrukturen treten zum Teil in das Rezirkulationsgebiet ein, zum Teil treten sie aber stark beschleunigt durch den Spalt zwischen Vor- und Hauptflügel aus. Die beschleunigte Bewegung der Wirbel und insbesondere ihr Austritt aus dem Spalt führen zur Emission von Schallwellen, wobei der plötzliche Impedanzsprung zwischen fester Wand und freier Strömung beim Abströmen über die Vorflügelhinterkante die Erzeugung akustischer Fluktuationen durch hydrodynamische Druckschwankungen zur Folge hat. Ist die Vorflügelhinterkante stumpf, ist die Wechselwirkung der austretenden Wirbel mit einer stromab entstehenden Wirbelstrasse als zusätzliche Schallquelle zu nennen.

Eine Maßnahme zur Lärmminderung kann eine Anpassung der Geometrie des Vorflügels an die Form des Rezirkulationsgebietes zum Ziel haben (Verdrängungskörper, Trennfläche, Balg). Auch Einrichtungen zur Beeinflussung der freien Scherschichten (Bürstenhaarreihen) oder zur Dämpfung der Schallausbreitung (akustische Absorberflächen) können vorgesehen sein.

Eine Möglichkeit zur aerodynamischen Lärmminderung von Vorflügeln eines Verkehrsflugzeuges ist aus der DE 100 19 185 A1 bekannt. Bei dieser Anordnung wird die rückseitige Profiloberfläche des Vorflügels, deren Form der Außenkontur des Hauptflügels angepasst ist, mit einem hohlen Verdrängungskörper (Balg) versehen, welcher sich mit Hilfe von Druckluft aus wenigstens einer Bleed-Air Leitung aufblasen lässt. Wird der Balg bei ausgefahrenem Vorflügel unter Druck gesetzt, dehnt er sich aus und die Größe des angrenzenden Rezirkulationsgebiets nimmt ab. Bei geeigneter Formgebung im aufgeblasenen Zustand wird so die lärmverursachende Wirbelbildung am ausgefahrenen Vorflügel reduziert.

Die DE 199 25 560 A1 beschreibt ein Einbringen einer am Zusatzflügel befestigten starren oder flexiblen Trennfläche, welche entlang der zwischen Rückströmungsgebiet und Spaltströmung verlaufenden Trennstromlinie angeordnet ist und sich in Richtung Hauptflügel erstreckt, wodurch der Impulsaustausch quer zur Richtung der Spaltströmung behindert und dadurch der Quellgeräuschpegel von Vorflügeln reduziert werden kann.

Eine ähnliche Methode zur Minderung des aerodynamischen Lärms an einem Zusatzflügel eines Flugzeuges ist in der DE 10 2004 056 537 A1 beschrieben. Die Anordnung besteht aus einer n-stabilen Trennfläche, welche mit Hilfe einer Aktuatoreinrichtung bei ausgefahrenem Zusatzflügel in den Spalt verlagerbar ist und sich dort ganz oder teilweise entlang der zwischen Rezirkulationsgebiet und Spaltströmung befindlichen Trennstromlinie erstreckt, wodurch die Wirbelbildung und letztlich die Schallabstrahlung signifikant reduziert werden kann.

Aus der DE 101 57 849 A1 ist eine weitere Anordnung zur Minderung des aerodynamischen Lärms an einem Vorflügel eines Verkehrsflugzeuges bekannt, welche den Energieaustausch über die am ausgefahrenen Vorflügel entstehenden Scherschichten durch den Einsatz von mehreren, seriell entlang der Vorflügelkanten angeordneten Bürstenhaaren reduziert. Der endliche Durchströmungswiderstand dieser, eine Trennfläche bildenden Bürstenhaare, bewirkt einen sanfteren Ausgleich der turbulenten Wechseldrücke in Strömungsrichtung und hat letztlich eine Abschwächung der in den Scherschichten wirkenden Lärmquellmechanismen zur Folge.

Im Dokument US 6,454,219 wird ein Slat beschrieben, dessen Außenhaut der Rückseite perforiert ist oder bei der auf der Außenhaut der Rückseite eines Slat eine zusätzliche Lärm-absorbierende Struktur aufgebracht ist.

Bei Anordnungen, die zur Lärmminderung eine Positionierung fester Strukturen im Spalt zwischen Vorflügel und Hauptflügel vorsehen (z.B. starre Trennfläche), besteht generell die Gefahr, dass bei einem Defekt der zum Wiedereinfahren notwendigen kinematischen Aktuatorik das Anlenken des Vorflügels an den Hauptflügel verhindert wird und das Flugzeug in Hochauftriebskonfiguration verbleiben muss.

Ein Nachteil bei der Verwendung zusätzlicher Anbauteile ist in einem grundsätzlich erhöhten Wartungsaufwand zu sehen. Dieser wird speziell bei elastischen bzw. beweglichen Baugruppen notwendig sein, um einer möglichen Zerstörung durch Alterung bzw. Ermüdung des verwendeten Materials vorzubeugen, wobei letztere sowohl durch fluktuierende aerodynamische Lasten als auch durch konstruktiv bedingte Wechselbeanspruchung ausgelöst sein kann.

Bei Bauteilen, die eine Anpassung der Vorflügelkontur an die Form des Rezirkulationsgebietes zum Ziel haben, können durch plötzliche Änderungen der Anströmbedingungen (z.B. Anstellwinkel) unerwünschte aerodynamische Effekte auftreten, wenn nicht eine sofortige Anpassung der Kontur an die veränderten Randbedingungen erfolgt.

Anordnungen die auf eine Dämpfung der Schallausbreitung abzielen, können die Schallabstrahlung nicht in dem Maße verringern, wie es durch günstige Beeinflussung des Schallquellmechanismus theoretisch möglich wäre.

Aufgabe der Erfindung ist, an einem Hochauftriebssystem eine Maßnahme zur Minderung des Strömungslärms zu schaffen, welche einfach im Aufbau, sicher im Betrieb und flexibel im Hinblick auf sich verändernde Anströmbedingungen ist und bei der die aerodynamischen Eigenschaften des Flügels weitgehend erhalten bleiben.

Diese Aufgabe wird durch die Merkmale des Anspruchs 1 gelöst. Weitere Ausführungsformen sind in den auf diesen rückbezogenen Unteransprüchen beschrieben.

Nach der Erfindung ist insbesondere ein Hochauftriebssystem für ein Flugzeug mit einem Hauptflügel und einem mittels einer Verstellvorrichtung gegenüber diesem in verschiedene Verstellzustände verstellbaren Vorflügel, zwischen dessen dem Hauptflügel zugewandten Rückseite und dem Hauptflügel sich ein Spalt ergibt, dessen Größe sich aus dem Verstellzustand des Vorflügels gegenüber dem Hauptflügel ergibt vorgesehen. Im Inneren des Vorflügels ist ein Luftleitungskanal mit zumindest einem Einlass und einem Auslass gebildet, wobei der Einlass an der dem Hauptflügel zugewandten Rückseite derart angeordnet ist, dass Luft aus dem Spalt durch den Einlass in den Luftleitungskanal fließt. Dabei ist auf der Rückseite des Vorflügels zusätzlich ein Abschnitt mit einem Absorbermaterial versehen. Das Absorbermaterial ist eine in die Rückseite integrierte Absorbermaterial-Schicht, in die der zumindest eine Einlass integriert ist.

Dabei kann vorgesehen sein, dass der Massenstrom am Einlass an der dem Hauptflügel zugewandten Rückseite mit einer Durchfluss-Verstellvorrichtung eingestellt werden kann, um die Strömung im Spalt zu beeinflussen. Die Durchfluss-Verstellvorrichtung kann insbesondere eine Verschluss-Vorrichtung aufweisen, die sich aufgrund des an der Rückseite anliegenden Druckes öffnen und schließen kann. Dazu kann die Durchfluss-Verstellvorrichtung ein an dem Einlass angeordnetes und in die Schließstellung des Einlasses vorgespanntes Öffnungsteil aufweisen, das derart eingestellt ist, dass sich das Öffnungsteil bei einem vorbestimmten an der Rückseite auftretenden ersten Druck in eine offene Stellung bewegt und bei einem vorbestimmten an der Rückseite auftretenden zweiten Druck in die Schließstellung geht.

Alternativ oder zusätzlich kann vorgesehen sein, dass die Durchfluss-Verstellvorrichtung aktiv gesteuert wird.

Generell kann die Durchfluss-Verstellvorrichtung innerhalb des Luftleitungskanals und/oder an den Einlässen und/oder an den Auslässen angeordnet sein.

Der Einlass kann aus mehreren Einlass-Öffnungen gebildet sein. Weiterhin können die Einlass-Öffnungen in einer Reihe entlang der Spannweitenrichtung des Vorflügels angeordnet sein. Auch können die Einlass-Öffnungen in mehreren Reihen entlang der Spannweitenrichtung des Vorflügels angeordnet sein. Die zumindest eine Einlass-Öffnung kann insbesondere eine kreisförmige Öffnung sein. Insbesondere kann die zumindest eine Einlass-Öffnung eine längliche Öffnung sein.

Der Vorflügel kann auf seiner dem Hauptflügel zugewandten Rückseite einen vom Hauptflügel aus gesehen konkav gekrümmten Bereich haben, in dem der zumindest eine Einlass angeordnet ist. Der Vorflügel kann an der Stelle zwischen Vorderseite und Rückseite am unteren Bereich des Vorflügels eine in Spannweitenrichtung des Vorflügels verlaufende Kante aufweisen.

Der Auslass kann ein einzelner Auslass sein oder kann aus mehreren Auslassöffnungen gebildet sein. Der Auslass von dem Luftleitungskanal kann in die äußere Umgebung des Vorflügels münden und dabei an einem oder beiden in der Spannweitenrichtung gelegenen Enden des Vorflügels angeordnet sein. Alternativ oder zusätzlich kann der Auslass von dem Luftleitungskanal in die äußere Umgebung des Vorflügels münden und dabei an der Hinterkante angeordnet sein. Weiterhin kann alternativ oder zusätzlich der Auslass von dem Luftleitungskanal in die äußere Umgebung des Vorflügels münden und dabei an der Kante, die an der Unterseite des Vorflügels gelegen ist, angeordnet sein.

Auch kann vorgesehen sein, dass an den Luftleitungskanal ein Verbindungskanal gekoppelt ist, der von dem Luftleitungskanal in das Innere des Hauptflügels mündet.

Zur Verstellung der Durchfluss-Verstellvorrichtung zwischen einem offenen und einem geschlossenen Zustand kann vorgesehen sein, dass die Durchfluss-Verstellvorrichtung funktional mit einer Ansteuervorrichtung gekoppelt ist, die eine Ansteuerfunktion zur Bildung von Stellsignalen oder Stellkommandos zur Ansteuerung der Durchfluss-Verstellvorrichtung aufweist.

Dabei kann die Ansteuervorrichtung eine Eingangsvorrichtung aufweisen, mit der die Ansteuervorrichtung Sensor- und/oder Systemdaten empfangen kann, und es kann vorgesehen sein, dass die Ansteuerfunktion die Stellkommandos für die Öffnung und das Schließen der Durchfluss-Verstellvorrichtung in Abhängigkeit des Verstellzustands des Vorflügels ermittelt.

Insbesondere kann die Ansteuervorrichtung eine Eingangs-Vorrichtung aufweisen, mit der die Ansteuervorrichtung Sensor- und/oder Systemdaten empfangen kann, und dabei kann vorgesehen sein, dass die Ansteuerfunktion die Stellkommandos für die Öffnung und das Schließen der Durchfluss-Verstellvorrichtung in Abhängigkeit von Sensor- und/oder Systemdaten ermittelt.

Die Ansteuervorrichtung kann in dem Vorflügel integriert sein.

Die Eingangsvorrichtung der Ansteuervorrichtung kann zum Empfang von Daten von dem Flugführungssystem des Flugzeugs eingerichtet sein und dabei kann insbesondere vorgesehen sein, dass die Ansteuerfunktion die Stellkommandos für die Öffnung und das Schließen des Einlasses in Abhängigkeit von Daten des Flugführungssystems ermittelt.

Dabei können die von dem Flugführungssystem des Flugzeugs empfangenen Daten die Verstellposition des Vorflügels beinhalten, wobei die Ansteuerfunktion die Stellkommandos für die Öffnung und das Schließen der Durchfluss-Verstellvorrichtung in Abhängigkeit der Verstellposition des Vorflügels ermittelt.

Weiterhin kann vorgesehen sein, dass die Ansteuerfunktion die Stellkommandos für die Durchfluss-Verstellvorrichtung in Abhängigkeit von Luftdaten, die von dem Flugführungssystem übermittelt worden sind, ermittelt. Dabei können die Luftdaten den Anstellwinkel des Flugzeugs und/oder die Geschwindigkeit und/oder die Fluglage des Flugzeugs beschreiben.

Die Ansteuervorrichtung der Durchfluss-Verstellvorrichtung kann eine Vergleichsfunktion aufweisen, die übermittelte Luftdaten und/oder die Verstellposition des Vorflügels mit einem ersten Sollwert und mit einem zweiten Sollwert vergleicht, wobei die Ansteuerfunktion bei bereichsweisem Erreichen des ersten Sollwertes Ansteuerkommandos zur Öffnung der Durchfluss-Verstellvorrichtung und bei bereichsweisem Erreichen des zweiten Sollwertes Ansteuerkommandos zum Schließen der Durchfluss-Verstellvorrichtung erzeugt und an die Durchfluss-Verstellvorrichtung übermittelt.

Die Ansteuervorrichtung kann mit einem im Rumpf befindlichen Rechner des Flugführungssystems integriert sein und die Stellkommandos über eine Kommandoleitung an die Durchfluss-Verstellvorrichtung übermittelt werden.

Weiterhin kann das Hochauftriebssystem zumindest einen Drucksensor aufweisen, der an der Rückseite des Vorflügels zur Messung des statischen Druckes der Luftströmung angeordnet ist und der mit der Eingangsvorrichtung zur Übertragung eines gemessenen Druckes an die Ansteuerfunktion funktional verbunden ist, wobei die Ansteuerfunktion derart gestaltet ist, dass diese Stellsignale für die Durchfluss-Verstellvorrichtung in Abhängigkeit des gemessenen Druckes ermittelt.

Die Durchfluss-Verstellvorrichtung kann insbesondere durch ein Ventil oder mehrere Ventile realisiert sein, das oder die innerhalb des Luftleitungskanals zur Regulierung des Durchflusses in demselben vorgesehen sind.

Weiterhin kann im Luftleitungskanal zumindest ein Strömungsantrieb angeordnet sein, der den Luftmassenstrom zwischen dem Einlass und dem Auslass beeinflusst.

Weiterhin kann vorgesehen sein, dass die Durchfluss-Verstellvorrichtung durch zumindest einen Piezo-Aktuator betätigt wird, mit dem insbesondere der Einlass oder mehrere oder sämtliche Einlässe und/oder der Auslass oder mehrere oder sämtliche Auslässe geöffnet und geschlossen werden können. Der zumindest eine Piezo-Aktuator kann funktional über eine Ansteuervorrichtung mit dem zumindest einen Drucksensor an der Rückseite des Vorflügels zur Messung des statischen Druckes der Luftströmung verbunden sein, um die Durchfluss-Verstellvorrichtung zu verstellen.

Der Drucksensor kann am Einlass und/oder am Auslass angeordnet sein.

Die Ansteuervorrichtung kann insbesondere eine Vergleichsfunktion aufweisen, mit der der Druck am zumindest einen Einlass und am zumindest einen Auslass verglichen wird und aufgrund der Stellsignale für die Durchfluss-Verstellvorrichtung in Abhängigkeit der ermittelten Druckdifferenz ermittelt werden.

Die Ansteuervorrichtung kann mit einem zentralen Rechner des Hochauftriebssystems, das die Verstellung der Hochauftriebsklappen kommandiert, integriert sein.

Weiterhin kann die Ansteuervorrichtung eine Tabelle mit einer Zuordnung von vorgegebenen operationellen Daten mit Soll-Stellpositionen der Durchlass-Verstelleinrichtung und eine Vergleichsfunktion aufweisen, mit der gemessene operationelle Daten mit den in der Vergleichstabelle gespeicherten operationellen Daten verglichen und bei bereichsweiser Übereinstimmung die jeweils zugeordnete Soll-Stellposition and die Einlass-Verstelleinrichtung übermittelt.

Erfindungsgemäß ist ein Flugzeug mit einem Hochauftriebssystem nach einer der vorgenannten Ausführungsformen vorgesehen. Dabei kann auch vorgesehen sein, dass der mit dem Luftleitungskanal verbundene Verbindungskanal in den Rumpf mündet.

Die Erfindung beinhaltet keine äußeren Anbauteile am Vorflügel. Zusätzliche bewegliche Elemente beschränken sich auf Baugruppen, die mit der Steuerung des Absaugmassenstroms in Verbindung stehen (z.B. Ventile).

Kann die zur Absaugung notwendige Druckdifferenz durch eine luftleitende Verbindung zwischen dem Hohlraum im Vorflügel und einer Unterdruckregion am Flugzeug erzeugt werden, sind der konstruktive Aufwand und das zusätzliche Gewicht verhältnismäßig gering.

Für einen hohlen Vorflügel ist die Umsetzung der Lärmminderungsmaßnahme auch als Nachrüstmaßnahme denkbar.

Die Anordnung ist unempfindlich gegenüber einer plötzlichen Veränderung der Anströmungsbedingungen (z.B. Anstellwinkeländerung).

Sollte die Absaugung ausfallen, ist abgesehen von einer Zunahme der Lärmemission kein negativer Effekt zu erwarten. Insbesondere bleibt der Vorflügel durch das Fehlen äußerer Anbauteile immer einziehbar.

Ausführungsbeispiele der Erfindung werden anhand der beiliegenden Figuren beschrieben, die zeigen:
- Figur 1 einen Teil eines Hauptflügels und einen vor diesem in einem ausgefahrenen Zustand gelegenen Vorflügel im Querschnitt von der Seite gesehen mit einer Darstellung der Strömung zwischen dem Vorflügel und dem Hauptflügel, wenn die erfindungsgemäße Vorrichtung zur Beeinflussung der Strömung nicht vorhanden ist,
- Figur 2 einen Teil eines Hauptflügels und einen Vorflügel in der Stellung der Figur 1 mit einer Darstellung der Strömung zwischen dem Vorflügel und dem Hauptflügel, wenn die erfindungsgemäße Vorrichtung zur Beeinflussung der Strömung vorhanden und aktiviert ist.

Erfindungsgemäß ist ein Hochauftriebssystem für ein Flugzeug mit einem Hauptflügel und einem mittels einer Verstellvorrichtung gegenüber diesem in verschiedene Verstellzustände verstellbaren Vorflügel vorgesehen. Der Vorflügel hat eine Rückseite 1 b, die dem Hauptflügel zugewandt ist. Zwischen der Rückseite 1 b und dem Hauptflügel 2 ergibt sich ein Spalt 5, dessen Größe sich aus dem Verstellzustand des Vorflügels 1 gegenüber dem Hauptflügel 2 und dadurch insbesondere durch die Entfernung des Vorflügels 1 zu dem Hauptflügel 2 ergibt. Im Inneren des Vorflügels ist ein Luftleitungskanal 11 mit zumindest einem Einlass 20 und einem Auslass gebildet. Dabei ist der Einlass 20 an der dem Hauptflügel zugewandten Rückseite 1 b angeordnet, um die Strömung im Spalt 5 zu beeinflussen.

Der Hohlraum 11 im Vorflügel 1 kann zusammenhängend oder in mehrere getrennte Einzelkammern unterteilt sein, z.B. um eine lokale Anpassung des Absaugmassenstroms, gesteuert über unterschiedliche Druckverhältnisse in den Einzelkammern, zu ermöglichen.

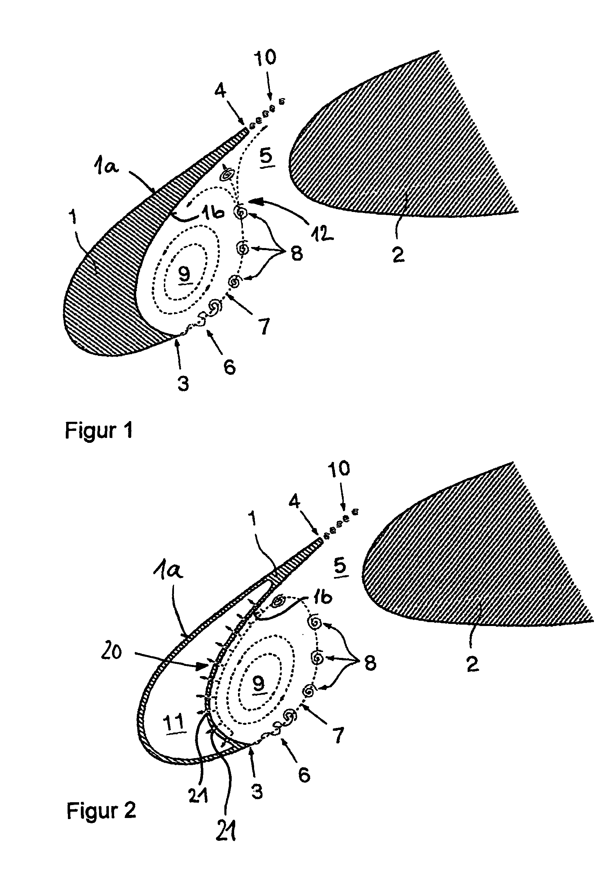

Die Figur 2 zeigt schematisch den Aufbau einer möglichen Ausführung der Anordnung zur Minderung des aerodynamischen Lärms an einem dem Hauptflügel 2 ausgefahrenen Vorflügel 1, sowie deren Einfluss auf die Vorflügel-Umströmung. In dem dargestellten zweidimensionalen Schnitt durch die Konfiguration wird ersichtlich, dass durch die erfindungsgemäße Lösung zur Lärmminderung eine perforierte Innenkontur am Vorflügel eingesetzt wird, durch welche die turbulente Luft aus dem Rezirkulationsgebiet 9 abgesaugt wird.

Zu diesem Zweck kann der Vorflügel insbesondere mit einem Hohlraum versehen sein, der als Luftleitungskanal 11 verwendet wird. Der Einlass 20 an der dem Hauptflügel zugewandten Rückseite 1 b wird in geeigneter Weise mit einem Unterdruck gegenüber dem Druck im Rezirkulationsgebiet 9 beaufschlagt, um einen kontinuierlichen Absaugmassenstrom durch die Perforation zu erzeugen. Die eingesaugte Luft wird dabei aus dem Hohlraum über wenigstens eine Luftleitung (nicht dargestellt) abgeführt.

Nach der Erfindung kann insbesondere vorgesehen sein, dass der an der dem Hauptflügel zugewandten Rückseite 1 b abgesaugte Massenstrom mit einer Durchfluss-Verstellvorrichtung eingestellt werden kann, um die Strömung im Spalt 5 zu beeinflussen. Der den Luftleitungskanal 11 durchströmende Massenstrom ergibt sich aus den Strömungsverhältnissen an dem zumindest einen Einlass und dem zumindest einem Auslass, gegebenenfalls je nach deren Öffnungszuständen und gegebenenfalls durch einen im Luftleitungskanal 11 wirksamen Strömungsantrieb oder mehrere im Luftleitungskanal 11 wirksame Strömungsantriebe.

Dazu kann die Durchfluss-Verstellvorrichtung eine Verschluss-Vorrichtung aufweisen, die sich aufgrund des an der Rückseite 1b anliegenden Druckes selbsttätig, d.h. ohne aktive Betätigung, öffnen und schließen kann. Die Durchfluss-Verstellvorrichtung kann an zumindest einem Einlass, zumindest einem Auslass und/oder innerhalb des Luftleitungskanals angeordnet sein.

Dazu kann die Durchfluss-Verstellvorrichtung ein an dem Einlass 20 angeordnetes und in die Schließstellung des Einlasses vorgespanntes Öffnungsteil aufweisen, das derart eingestellt ist, dass sich das Öffnungsteil bei einem vorbestimmten an der Rückseite 1 b auftretenden ersten Druck in eine offene Stellung bewegt und bei einem vorbestimmten an der Rückseite 1 b auftretenden zweiten Druck in die Schließstellung geht.

Weiterhin kann die Durchfluss-Verstellvorrichtung aktiv gesteuert sein. Dazu kann insbesondere eine Durchfluss-Verstellvorrichtung innerhalb des Luftleitungskanals 11 und/oder an den Einlässen angeordnet sein.

Um die Wirkungsweise der Anordnung im Detail zu erläutern, wird zunächst anhand Figur 1 auf den Schallentstehungsmechanismus bei der Umströmung der unbeeinflussten Basiskonfiguration eingegangen. Die dem Hauptflügel 2 zugewandte Seite (Innenseite) des Vorflügels 1 ist in der Regel konkav geformt, um ihn im Reiseflug an die Nasenkontur des Hauptflügels anlenken zu können. Am Übergang von der konvexen Außenseite zur konkaven Innenseite entsteht ein Knick in der Kontur 3, dem die schnelle Strömung um den Vorflügel nicht folgen kann. Die Strömung löst an dieser Kante ab und es entsteht eine freie Scherschicht 6, welche sich infolge von Störungen und Instabilitäten zu diskreten Wirbelstrukturen 8 aufrollt. Die so kontinuierlich entstehenden Wirbel werden mit der Strömung entlang einer (fiktiven) Trennstromlinie 7 transportiert, bis sie sich in der Nähe des Wiederanlegepunktes auf der Vorflügelunterseite befinden. An dieser Stelle teilt sich die Strömung auf, wobei hier vereinfachend nur die Strömung in einer Ebene diskutiert und eine evtl. vorhandene Querströmung in Spannweitenrichtung vernachlässigt wird. Mit Annäherung an den Staupunkt werden die Wirbel Scherkräften der mittleren Strömung ausgesetzt und länglich verformt. Ein Teil der heranströmenden Wirbel 8 wird dabei kurz vor Erreichen des Staupunkts in das turbulente Rezirkulationsgebiet 9 eintreten, dessen kontinuierliche Rotationsbewegung infolge der schnellen Spaltströmung ständig aufrechterhalten wird. Die Turbulenz innerhalb der Rezirkulationszone wirkt wiederum destabilisierend auf die freie Scherschicht und regt deren Zerfall in diskrete Wirbelstrukturen an. Der übrige Teil der sich dem Wiederanlegepunkt nähernden Wirbel wird durch den Spalt 5 zwischen Vor- und Hauptflügel transportiert, erfährt dabei eine erhebliche Beschleunigung und tritt schließlich unter Wechselwirkung mit der Hinterkante 4 des Vorflügels und einer dort unter Umständen entstehenden, alternierenden Wirbelstrasse 10 aus diesem aus.

Als Ursachen für die erhebliche Schallentstehung am Vorflügel sind verschiedene Effekte anzuführen. Ein Quellmechanismus ist bekanntlich in den durch wandnahe instationäre Wirbelbewegung verursachten Druckfluktuationen auf den Profiloberflächen zu sehen (Oberflächenquellen). Darüber hinaus führt die starke Beschleunigung der Wirbel beim Transport durch den Spalt unmittelbar zu Schallemission (Volumenquellen). Als wesentliche Schallquelle ist außerdem der plötzliche Impedanzsprung beim Abströmen der Wirbel über die Vorflügelhinterkante zu nennen (Kantenlärm). Eine eventuell stromab dieser Stelle entstehende Wirbelstraße stellt speziell infolge ihrer Interaktion mit aus dem Spalt austretenden Wirbeln eine weitere Schallquelle dar. Weiter stromab können durch den Spalt ausgestoßene Wirbel in die Grenzschicht auf dem Hauptprofil gelangen und dort zusätzlichen Oberflächenschall generieren.

Zur Erläuterung der schallreduzierenden Wirkung der vorgestellten Anordnung, empfiehlt es sich, zunächst einen Vergleich der zwischen Basiskonfiguration (Figur 1) und modifizierter Variante (Figur 2) veränderten Strömungstopologie vorzunehmen. In beiden Fällen wird sich zwischen Rezirkulationsgebiet 9 und der schnellen Spaltströmung eine freie Scherschicht 6 ausbilden, aus welcher sich infolge von Störungen und Instabilitäten schließlich diskrete Wirbelstrukturen 8 formieren. Da die Grenzschichtdicke auf der Vorflügelinnenseite durch die Absaugung abnimmt, ist davon auszugehen, dass auch die freie Scherschicht im beeinflussten Fall dünner ausfallen wird. Dem Rezirkulationsgebiet 9 wird durch die Absaugung wirbelbehaftete Luft entzogen, weswegen die anfängliche Entwicklung der freien Scherschicht 6 durch weniger Instabilitäten gestört werden wird als im unbeeinflussten Fall. Die Kombination dieser Effekte kann gegenüber der Basiskonfiguration die Bildung kleinerer Wirbelstrukturen sowie deren etwas verzögerte Formierung zur Folge haben. Wie in Figur 1 durch die Verzweigung der Trennstromlinie 7 in der Nähe des Wiederanlegepunktes auf der Vorflügelinnenseite angedeutet ist, teilt sich die wirbelbehaftete Strömung an dieser Stelle, wobei insbesondere die Wirbel, die nicht in das Rezirkulationsgebiet 9 eintreten, sondern stattdessen durch den Spalt 5 beschleunigt werden und über die Hinterkante des Vorflügels abströmen, starke Schallemission hervorrufen.

Dieser unerwünschte Effekt infolge des Austretens von Wirbeln aus dem Spalt 5 kann durch die in Figur 2 gezeigte Anordnung teilweise bzw. vollständig vermieden werden. Aus Kontinuitätsgründen muss die aus dem Rezirkulationsgebiet 9 abgesaugte Luftmenge von der Umströmung zugeführt werden. Da die Strömung an der unteren Vorflügelkante 3 geometrieinduziert ablöst, kann die Luft nur über eine Verlagerung der Trennstromlinie 7 dem Rezirkulationsgebiet zuströmen, schließt man ausgleichende Randeffekte an den spannweitigen Enden des Vorflügels aus. Die durch die Absaugung eintretende Verlagerung der Trennstromlinie hat einen vermehrten Transport von Wirbeln aus der freien Scherschicht 8 in Richtung der Absaugschlitze zur Folge, wodurch zugleich der Ausstoß von Wirbeln durch den Spalt 5 reduziert und damit die Schallemission vermindert wird. Über den Absaugmassenstrom lässt sich dabei die Aufteilung der Wirbelstrukturen am Verzweigungspunkt steuern. Da die Dicke der wirbelbehafteten Scherschicht 7 im Vergleich zum schnell durchströmten Spalt 5 gering ist, wird schon bei kleinem Verhältnis von Absaugmassenstrom zu Spaltmassenstrom, d.h. ohne wesentliche Veränderung der aerodynamischen Wirkung, ein lärmreduzierender Effekt zu erzielen sein. Bei größeren Absaugmassenströmen ist die vollständige Umlenkung aller Scherschichtwirbel in das Rezirkulationsgebiet denkbar, eine Limitierung des Absaugmassenstroms erscheint jedoch sinnvoll, um den aerodynamischen Einfluss der Anordnung zu beschränken.

Der Einlass 20 eines Vorflügels kann aus einer Einlass-Öffnung oder aus mehreren Einlass-Öffnungen gebildet sein. Die Einlass-Öffnungen können in einer Reihe entlang der Spannweitenrichtung des Vorflügels angeordnet sein. Auch können die Einlass-Öffnungen in mehreren Reihen entlang der Spannweitenrichtung des Vorflügels angeordnet sein.

Auch kann die zumindest eine Einlass-Öffnung eine kreisförmige Öffnung 21 sein. Die zumindest eine Einlass-Öffnung kann eine längliche Öffnung sein.

Erfindungsgemäß ist auf der Rückseite 1b des Vorflügels 1 zusätzlich ein Abschnitt mit einem Absorbermaterial als eine in die Vorflügel-Rückseite integrierte Absorbermaterialschicht versehen, in die der zumindest eine Einlass integriert ist.

Wird dabei ein luftdurchlässiges, evtl. poröses Material verwendet, ist weiterhin denkbar, den lärmreduzierenden Effekt der Anordnung durch die Kombination von Absaugung und einer permeablen lokal reagierenden Absorberfläche zu verbessern. Auf diese Weise könnten sowohl Schallentstehung als auch Schallausbreitung im Sinne einer Lärmminderung günstig beeinflusst werden.

Der Vorflügel kann auf verschiedene Weise und insbesondere auch im Zusammenhang mit der Anordnung des Einlasses und/oder des Auslasses gestaltet sein. Dabei kann der Vorflügel auf seiner dem Hauptflügel zugewandten Rückseite 1 b einen vom Hauptflügel aus gesehen konkav gekrümmten Bereich 4 haben, in dem der zumindest eine Einlass 20 angeordnet ist. Weiterhin kann der Vorflügel 1 an der Stelle zwischen Vorderseite 1 a und Rückseite 1 b am unteren Bereich des Vorflügels 1 eine in Spannweitenrichtung des Vorflügels 1 verlaufende Kante 3 aufweisen.

Der Auslass kann aus mehreren Auslassöffnungen gebildet sein. Insbesondere kann der Auslass von dem Luftleitungskanal in die äußere Umgebung des Vorflügels 1 münden und dabei an einem oder beiden in der Spannweitenrichtung gelegenen Enden des Vorflügels 1 angeordnet sein. Alternativ oder zusätzlich kann der Auslass von dem Luftleitungskanal in die äußere Umgebung des Vorflügels 1 münden und dabei an der Hinterkante 4 angeordnet sein.

Der Auslass kann von dem Luftleitungskanal 11 in die äußere Umgebung des Vorflügels 1 münden und dabei an der Kante angeordnet sein, die an der Unterseite des Vorflügels gelegen ist.

Auch kann an den Luftleitungskanal 11 ein Verbindungskanal gekoppelt sein, der von dem Luftleitungskanal 11 in das Innere des Hauptflügels mündet.

Nach einer weiteren Ausführungsform der Erfindung kann die Durchfluss-Verstellvorrichtung funktional mit einer Ansteuervorrichtung gekoppelt sein, die eine Ansteuerfunktion zur Bildung von Stellsignalen oder Stellkommandos zur Ansteuerung der Durchfluss-Verstellvorrichtung aufweist, mit denen die Durchfluss-Verstellvorrichtung zwischen einem offenen und einem geschlossenen Zustand verstellt werden kann. Die Ansteuervorrichtung kann eine Eingangsvorrichtung aufweisen, mit der die Ansteuervorrichtung Sensor- und/oder Systemdaten empfangen kann. Insbesondere kann die Ansteuerfunktion die Stellkommandos für die Öffnung und das Schließen der Durchfluss-Verstellvorrichtung in Abhängigkeit des Verstellzustands des Vorflügels ermitteln.

Weiterhin kann die Ansteuervorrichtung eine Eingangs-Vorrichtung aufweisen, mit der die Ansteuervorrichtung Sensor- und/oder Systemdaten empfangen kann, und es kann vorgesehen sein, dass die Ansteuerfunktion die Stellkommandos für die Öffnung und das Schließen der Durchfluss-Verstellvorrichtung in Abhängigkeit von Sensor-und/oder Systemdaten ermittelt.

Die Ansteuervorrichtung kann in dem Vorflügel 1 integriert sein.

Die Eingangsvorrichtung der Ansteuervorrichtung kann zum Empfang von Daten von dem Flugführungssystem des Flugzeugs eingerichtet sein. Die Ansteuerfunktion kann funktional weiterhin derart gestaltet sein, dass die Stellkommandos für die Öffnung und das Schließen der Durchfluss-Verstellvorrichtung in Abhängigkeit von Daten des Flugführungssystems ermittelt.

Dabei können die von dem Flugführungssystem des Flugzeugs empfangenen Daten insbesondere die Verstellposition des Vorflügels beinhalten und die Ansteuerfunktion kann funktional weiterhin derart gestaltet sein, dass die Stellkommandos für die Öffnung und das Schließen der Durchfluss-Verstellvorrichtung in Abhängigkeit der Verstellposition des Vorflügels ermittelt.

Weiterhin kann vorgesehen sein, dass die Ansteuerfunktion die Stellkommandos für die Durchfluss-Verstellvorrichtung in Abhängigkeit von Luftdaten, die von dem Flugführungssystem übermittelt worden sind, ermittelt. Die Luftdaten können dabei den Anstellwinkel des Flugzeugs und/oder die Geschwindigkeit und/oder die Fluglage des Flugzeugs beschreiben.

Weiterhin kann vorgesehen sein, dass die Ansteuervorrichtung der Durchfluss-Verstellvorrichtung eine Vergleichsfunktion aufweist, die übermittelte Luftdaten und/oder die Verstellposition des Vorflügels mit einem ersten Sollwert und mit einem zweiten Sollwert vergleicht, wobei die Ansteuerfunktion bei bereichsweisem Erreichen des ersten Sollwertes Ansteuerkommandos zur Öffnung der Durchfluss-Verstellvorrichtung und bei Erreichen des zweiten Sollwertes Ansteuerkommandos zum Schließen der Durchfluss-Verstellvorrichtung erzeugt und an die Durchfluss-Verstellvorrichtung übermittelt.

Die Ansteuervorrichtung kann mit einem im Rumpf befindlichen Rechner des Flugführungssystems integriert sein, wobei die Stellkommandos über eine Kommandoleitung an die Durchfluss-Verstellvorrichtung übermittelt werden.

Das Hochauftriebssystem kann zumindest einen Drucksensor aufweisen, der an der Rückseite 1a des Vorflügels 1 zur Messung des statischen Druckes der Luftströmung angeordnet ist. Der Drucksensor kann mit der Eingangsvorrichtung zur Übertragung eines gemessenen Druckes an die Ansteuerfunktion funktional verbunden sein und die Ansteuerfunktion kann derart gestaltet sein, dass diese Stellsignale für die Durchfluss-Verstellvorrichtung in Abhängigkeit des gemessenen Druckes ermittelt.

Bei einer Ausführungsform der Erfindung kann die Durchfluss-Verstellvorrichtung durch ein Ventil oder mehrere Ventile realisiert sein, das oder die innerhalb des Luftleitungskanals 11 zur Regulierung des Durchflusses in demselben vorgesehen sind. Das Ventil oder die Ventile können nach beschriebenen Alternativen mit der Ansteuer-Vorrichtung funktional verbunden sein, um das Ventil oder die Ventile aktiv zu verstellen. Alternativ oder zusätzlich kann die Verstellung des Ventils oder die Ventile in beschriebener Weise passiv und insbesondere aufgrund des an der Rückseite 1 b anliegenden Druckes erfolgen. Das zusätzliche Vorsehen einer passiven Verstellung kann insbesondere zur Verfügbarmachung einer Sicherheitsfunktion im Sinne einer Fail-Safe-Funktion vorteilhaft sein.

Bei den genannten Ausführungsformen der Erfindung kann der Luftmassenstrom im Luftleitungskanal 11 mit Hilfe zumindest eines Strömungsantriebs erzeugt werden, der den Luftmassenstrom zwischen dem Einlass und dem Auslass beeinflusst, d.h. erzeugt oder unterstützt. Der zumindest eine Strömungsantrieb kann innerhalb des Luftleitungskanals 11 zwischen Einlass und Auslass angeordnet sein. Der Strömungsantrieb kann eine Pumpe oder ein Propeller sein. Die Antriebsvorrichtung für den Strömungsantrieb kann dabei außerhalb des Luftleitungskanal 11 angeordnet sein.

Nach der Erfindung kann die Durchfluss-Verstellvorrichtung auch durch zumindest einen Piezoaktuator betätigt werden.

Dabei kann der zumindest eine Piezoaktuator in der Verschluss-Vorrichtung oder Öffnungs-Vorrichtung zum Öffnen oder Schließen des Einlasses strukturell integriert sein. Auch kann die Durchfluss-Verstellvorrichtung aus einem oder mehreren Piezoaktuatoren gebildet sein, die auf einer Oberfläche oder auf zwei sich in Längsrichtung der Durchfluss-Verstellvorrichtung erstreckenden und entgegen gesetzt zueinander liegenden Oberflächen aufgebracht sind. Dabei ist die Durchfluss-Verstellvorrichtung flexibel gestaltet, so dass entsprechend aufgebrachte Piezoaktuatoren, die für die Stellmodi Kontraktion und Elongation ausgelegt sind, die Gestalt und insbesondere die Wölbung der Durchfluss-Verstellvorrichtung in deren Längsrichtung gesehen verändern können.

Die Piezoaktuatoren können zum Beispiel in Form von piezokeramischen Folien, dünnen Platten, Wafern oder Fasern, einschließlich piezokeramischen Fasern mit Interdigitalelektrode gebildet sein. Mehrere plattenförmige Piezoaktuatoren können auch in mehreren diskreten Lagen schichtweise übereinander angeordnet und zu einem flächigen plattenförmigen Aktuatorpaket konfektioniert sein (als Multilayer-Struktur oder in bimorpher Gestaltung).

Dabei kann der zumindest eine Piezoaktuator über eine Ansteuervorrichtung nach der Erfindung aktiv angesteuert werden, oder die Piezoaktuatoren können mit einer Passivschaltung realisiert sein und die Gestaltänderung der Durchfluss-Verstellvorrichtung aufgrund einer Bewegung derselben vornehmen, d.h. eine anfängliche Bewegung verstärken und/oder fortführen, die auf beschriebene Weise selbsttätig aufgrund auftretender Druckunterschiede erfolgen kann. Die Passivschaltung kann ohne Ansteuervorrichtung oder mit dieser, z.B. als Sicherheitsfunktion gebildet sein. Dabei sind die Piezoaktuatoren und die diese koppelnde Schaltung derart gestaltet, dass diese bei einer Dehnung derselben, aufgrund einer anfänglichen Bewegung in einer Einfahr- oder Ausfahrrichtung der Durchfluss-Verstellvorrichtung Ansteuersignale an zumindest einen Teil der Piezoaktuatoren gesendet wird, um diese im Sinne der Fortführung der anfänglich erfassten Verstellung der Durchfluss-Verstellvorrichtung zu betätigen. Die Piezoaktuatoren können auch ein Stellwegvergrößerungs-Element wie z.B. einen entsprechenden Stab aufweisen, der die Auslenkungen der Piezoaktuatoren entsprechend transformiert.

Insbesondere kann vorgesehen sein, dass der Piezoaktuator funktional über eine Ansteuervorrichtung mit dem zumindest einen Drucksensor an der Rückseite 1a des Vorflügels 1 zur Messung des statischen Druckes der Luftströmung verbunden ist, um die Durchfluss-Verstellvorrichtung zu verstellen.

Der zumindest eine Drucksensor kann am Einlass und/oder am Auslass angeordnet sein.

Weiterhin kann die Ansteuervorrichtung eine Vergleichsfunktion aufweisen, mit der der Druck am zumindest einen Einlass und am zumindest einen Auslass verglichen wird und aufgrund der Stellsignale für die Durchfluss-Verstellvorrichtung in Abhängigkeit der ermittelten Druckdifferenz ermittelt werden.

Die Ansteuervorrichtung kann mit einem zentralen Rechner des Hochauftriebssystems, das die Verstellung der Hochauftriebsklappen kommandiert, integriert sein.

Die Ansteuervorrichtung kann eine Tabelle mit einer Zuordnung von vorgegebenen operationellen Daten mit Soll-Stellpositionen der Einlass-Verstelleinrichtung und eine Vergleichsfunktion aufweisen, mit der gemessene operationelle Daten mit den in der Vergleichstabelle gespeicherten operationellen Daten verglichen und bei bereichsweiser Übereinstimmung die jeweils zugeordnete Soll-Stellposition and die Einlass-Verstelleinrichtung übermittelt.

### Bezugszeichen

- 1: Vorflügel
- 1a: Vorderseite des Vorflügels
- 1b: Rückseite des Vorflügels
- 2: Hauptflügel
- 3: Unterkante (des Vorflügels 1)
- 4: Hinterkante (des Vorflügels 1)
- 5: Spalt
- 6: freie Scherschicht
- 7: Trennstromlinie
- 8: Wirbelstrukturen
- 9: Rezirkulationsgebiet
- 10: Wirbelstraße
- 11: Hohlraum (des Vorflügels 1).

## Patentansprüche

1. Hochauftriebssystem für ein Flugzeug mit einem Hauptflügel und einem mittels einer Verstellvorrichtung gegenüber diesem in verschiedene Verstellzustände verstellbaren Vorflügel, zwischen dessen dem Hauptflügel zugewandten Rückseite (1 b) und dem Hauptflügel (2) sich ein Spalt (5) ergibt, dessen Größe sich aus dem Verstellzustand des Vorflügels (1) gegenüber dem Hauptflügel (2) ergibt,
wobei im Inneren des Vorflügels ein Luftleitungskanal (11) mit zumindest einem Luftleitungskanal-Einlass (20) und einem Luftleitungskanal-Auslass gebildet ist, wobei der Luftleitungskanal-Einlass (20) an der dem Hauptflügel zugewandten Rückseite (1 b) derart angeordnet ist, dass Luft aus dem Spalt (5) durch den Luftleitungskanal-Einlass (20) in den Luftleitungskanal (11) fließt,
**dadurch gekennzeichnet, dass** sich auf der Rückseite (1 b) des Vorflügels (1) zusätzlich ein Abschnitt mit einem Absorbermaterial als eine in die Vorflügel-Rückseite (1b) integrierte Absorbermaterial-Schicht befindet, in die der zumindest eine Luftleitungskanal-Einlass integriert ist.

2. Hochauftriebssystem nach dem Anspruch 1, **dadurch gekennzeichnet, dass** das Absorbermaterial ein luftdurchlässiges Material ist.

3. Hochauftriebssystem nach einem der vorstehenden Ansprüche, **dadurch gekennzeichnet, dass** das Absorbermaterial ein poröses Material ist.

4. Hochauftriebssystem nach einem der vorstehenden Ansprüche, **dadurch gekennzeichnet, dass** der Massenstrom am Luftleitungskanal-Einlass (20) an der dem Hauptflügel zugewandten Rückseite (1 b) mit einer Durchfluss-Verstellvorrichtung eingestellt werden kann, um die Strömung im Spalt (5) zu beeinflussen.

5. Hochauftriebssystem nach einem der voranstehenden Ansprüche 1 oder 2, **dadurch gekennzeichnet, dass** die Durchfluss-Verstellvorrichtung eine Verschluss-Vorrichtung aufweist, die sich aufgrund des an der Rückseite (1 b) anliegenden Druckes öffnen und schließen kann.

6. Hochauftriebssystemnach dem Anspruch5, **dadurch gekennzeichnet, dass** der Massenstrom am Luftleitungskanal-Einlass (20) an der dem Hauptflügel zugewandten Rückseite (1 b) mit einer Durchfluss-Verstellvorrichtung eingestellt werden kann und dass die Durchfluss-Verstellvorrichtung ein an dem Luftleitungskanal-Einlass (20) angeordnetes und in die Schließstellung des Luftleitungskanal-Einlasses vorgespanntes Öffnungsteil aufweist, das derart eingestellt ist, dass sich das Öffnungsteil bei einem vorbestimmten an der Rückseite (1b) auftretenden ersten Druck in eine offene Stellung bewegt und bei einem vorbestimmten an der Rückseite (1 b) auftretenden zweiten Druck in die Schließstellung geht.

7. Hochauftriebssystem nach dem Anspruch 4, **dadurch gekennzeichnet, dass** die Durchfluss-Verstellvorrichtung aktiv gesteuert wird.

8. Hochauftriebssystem nachdem Anspruch 7, **dadurch gekennzeichnet, dass** die Durchfluss-Verstellvorrichtung funktional mit einer Ansteuervorrichtung gekoppelt ist, die eine Ansteuerfunktion zur Bildung von Stellsignalen oder Stellkommandos zur Ansteuerung der Durchfluss-Verstellvorrichtung aufweist, mit denen die Durchfluss-Verstellvorrichtung zwischen einem offenen und einem geschlossenen Zustand verstellt werden kann, wobei die Ansteuervorrichtung eine Eingangsvorrichtung aufweist, mit der die Ansteuervorrichtung Sensor- und/oder Systemdaten empfangen kann, und dass die Ansteuerfunktion die Stellkommandos für die Öffnung und das Schließen der Durchfluss-Verstellvorrichtung in Abhängigkeit des Verstellzustands des Vorflügels ermittelt, oder dass die Ansteuerfunktion die Stellkommandos für die Öffnung und das Schließen des Luftleitungskanal-Einlasses in Abhängigkeit von Sensor- und/oder Systemdaten ermittelt.

9. Hochauftriebssystem nachdem Anspruch 4, **dadurch gekennzeichnet, dass** die Durchfluss-Verstellvorrichtung durch zumindest einen Piezoaktuator betätigt wird.

10. Hochauftriebssystem nach einem der vorstehenden Ansprüche, **dadurch gekennzeichnet, dass** der Vorflügel (1) an der Stelle zwischen Vorderseite (1 a) und Rückseite (1b) am unteren Bereich des Vorflügels (1) eine in Spannweitenrichtung des Vorflügels (1) verlaufende Kante (3) aufweist.

11. Hochauftriebssystem nach einem der vorstehenden Ansprüche, **dadurch gekennzeichnet, dass** der Luftleitungskanal-Auslass von dem Luftleitungskanal in die äußere Umgebung des Vorflügels (1) mündet und dabei an einem oder beiden in der Spannweitenrichtung gelegenen Enden des Vorflügels (1) oder an der Hinterkante (4) des Vorflügels (1) oder an der Unterseite des Vorflügels (1) gelegen ist, angeordnet ist.

## Claims

1. High-lift system for an aircraft having a main wing and a slat which can be adjusted into various adjustment states with respect to the main wing by means of an adjustment device, a gap (5) being provided between the rear side (1b) of the slat facing the main wing and the main wing (2), the size of said gap (5) resulting from the adjustment state of the slat (1) with respect to the main wing (2),
wherein an air conducting duct (11), having at least one air conducting duct inlet (20) and one air conducting duct outlet, is formed in the interior of the slat, wherein the air conducting duct inlet (20) is arranged on the rear side (1b) facing the main wing in such a way that air from the gap (5) flows through the air conducting duct inlet (20) into the air conducting duct (11),
**characterized in that** in addition on the rear side (1b) of the slat (1) there is a section with an absorber material as an absorber material layer which is integrated into the slat rear side (1b) and into which the at least one air conducting duct inlet is integrated.

2. High-lift system according to Claim 1, **characterized in that** the absorber material is an air-permeable material.

3. High-lift system according to one of the preceding claims, **characterized in that** the absorber material is a porous material.

4. High-lift system according to one of the preceding claims, **characterized in that** the mass flow at the air conducting duct inlet (20) can be set at the rear side (1b) facing the main wing with a through-flow adjustment device in order to influence the flow in the gap (5).

5. High-lift system according to one of the preceding Claims 1 and 2, **characterized in that** the through-flow adjustment device has a closure device which can open and close on the basis of the pressure present at the rear side (1b).

6. High-lift system according to Claim 5, **characterized in that** the mass flow at the air conducting duct inlet (20) can be set at the rear side (1b) facing the main wing with a through-flow adjustment device, and **in that** the through-flow adjustment device has an open part which is arranged on the air conducting duct inlet (20) and is prestressed into the closed position of the air conducting duct inlet and is set in such a way that the opening part moves into an open position when there is a predetermined first pressure occurring at the rear side (1b) and goes into the closed position when there is a predetermined second pressure occurring at the rear side (1b).

7. High-lift system according to Claim 4, **characterized in that** the through-flow adjustment device is controlled actively.

8. High-lift system according to Claim 7, **characterized in that** the through-flow adjustment device is functionally coupled to an actuation device which has an actuation function for forming actuation signals or actuation commands for actuating the through-flow adjustment device, with which actuation signals or actuation commands the through-flow adjustment device can be adjusted between an open state and a closed state, wherein the actuation device has an input device with which the actuation device can receive sensor data and/or system data, and **in that** the actuation function determines the actuation commands for opening and closing the through-flow adjustment device in dependence on the adjustment state of the slat, or **in that** the actuation function determines the actuation commands for opening and closing the air conducting duct inlet in dependence on sensor data and/or system data.

9. High-lift system according to Claim 4, **characterized in that** the through-flow adjustment device is activated by at least one piezoactuator.

10. High-lift system according to one of the preceding claims, **characterized in that** the slat (1) has, at the location between the front side (1a) and the rear side (1b) in the lower region of the slat (1), an edge (3) running in the spanwise direction of the slat (1).

11. High-lift system according to one of the preceding claims, **characterized in that** the air conducting duct outlet of the air conducting duct opens into the outer surroundings of the slat (1), and is arranged at one end, or at both ends, located in the spanwise direction, of the slat (1) or on the rear edge (4) of the slat (1) or on the underside of the slat (1).

## Revendications

1. Système hypersustentateur pour un avion comprenant une aile principale et un bec de bord d'attaque qui peut être déplacé dans différents états de réglage par rapport à celle-ci, au moyen d'un dispositif de réglage, et entre la face arrière (1b) duquel, tournée vers l'aile principale, et l'aile principale (2) il existe une fente (5) dont la taille est le résultat de l'état de réglage du bec de bord d'attaque (1) par rapport à l'aile principale (2),
une canalisation de conduite d'air (11), dotée d'au moins une entrée de canalisation de conduite d'air (20) et d'une sortie de canalisation de conduite d'air, étant formée à l'intérieur du bec de bord d'attaque, l'entrée de canalisation de conduite d'air (20) étant disposée sur la face arrière (1b) tournée vers l'aile principale, de manière à ce que de l'air s'écoule de la fente (6) dans la canalisation de conduite d'air (11), en passant par l'entrée de canalisation de conduite d'air (20),
**caractérisé en ce que**
la face arrière (1b) du bec de bord d'attaque (1) comporte en outre une partie avec un matériau absorbeur, en tant que couche de matériau absorbeur qui est intégrée dans la face arrière (1b) du bec de bord d'attaque et dans laquelle est intégrée l'entrée de canalisation de conduite d'air, au nombre d'au moins une.

2. Système hypersustentateur selon la revendication 1, **caractérisé en ce que** le matériau absorbeur est un matériau perméable à l'air.

3. Système hypersustentateur selon l'une quelconque des revendications précédentes, **caractérisé en ce que** le matériau absorbeur est un matériau poreux.

4. Système hypersustentateur selon l'une quelconque des revendications précédentes, **caractérisé en ce que** le flux massique à l'entrée de canalisation de conduite d'air (20), sur la face arrière (1b) tournée vers l'aile principale, peut être réglé avec un dispositif de réglage de débit, en vue d'influencer l'écoulement dans la fente (5).

5. Système hypersustentateur selon l'une quelconque des revendications 1 ou 2, **caractérisé en ce que** le dispositif de réglage de débit présente un dispositif de fermeture qui peut s'ouvrir et fermer sous l'effet de la pression appliquée contre la face arrière (1b).

6. Système hypersustentateur selon la revendication 5, **caractérisé en ce que** le flux massique à l'entrée de canalisation de conduite d'air (20), sur la face arrière (1b) tournée vers l'aile principale, peut être réglé avec un dispositif de réglage de débit, et **en ce que** le dispositif de réglage de débit présente un élément d'ouverture qui est disposé à l'entrée de canalisation de conduite d'air (20) et est mis sous précontrainte en direction de la position de fermeture de l'entrée de canalisation de conduite d'air et qui est réglé de manière telle que l'élément d'ouverture, en présence d'une première pression prédéterminée s'établissant sur la face arrière (1b), se déplace dans une position ouverte et, en présence d'une deuxième pression prédéterminée s'établissant sur la face arrière (1b), passe à la position de fermeture.

7. Système hypersustentateur selon la revendication 4, **caractérisé en ce que** le dispositif de réglage de débit est commandé de façon active.

8. Système hypersustentateur selon la revendication 7, **caractérisé en ce que** le dispositif de réglage de débit est couplé fonctionnellement à un dispositif d'activation qui présente une fonction d'activation destinée à générer des signaux de manoeuvre ou des commandes de manoeuvre pour activer le dispositif de réglage de débit, qui permettent de déplacer le dispositif de réglage de débit entre un état ouvert et un état fermé, le dispositif d'activation présentant un dispositif d'entrée avec lequel le dispositif d'activation peut recevoir des données de capteur et/ou de système, et **en ce que** la fonction d'activation détermine les commandes de manoeuvre pour l'ouverture et la fermeture du dispositif de réglage de débit en fonction de l'état de réglage du bec de bord d'attaque, ou **en ce que** la fonction d'activation détermine les commandes de manoeuvre pour l'ouverture et la fermeture de l'entrée de canalisation de conduite d'air en fonction de données de capteur et/ou de système.

9. Système hypersustentateur selon la revendication 4, **caractérisé en ce que** le dispositif de réglage de débit est actionné par au moins un piézo-actionneur.

10. Système hypersustentateur selon l'une quelconque des revendications précédentes, **caractérisé en ce que** le bec de bord d'attaque (1), à l'emplacement entre la face avant (1a) et la face arrière (1b), dans la partie inférieure du bec de bord d'attaque (1), présente une arête (3) s'étendant dans le sens de l'envergure du bec de bord d'attaque (1).

11. Système hypersustentateur selon l'une quelconque des revendications précédentes, **caractérisé en ce que** la sortie de canalisation de conduite d'air débouche de la canalisation de conduite d'air dans l'espace extérieur entourant le bec de bord d'attaque (1) et est disposée à une extrémité ou aux deux extrémités du bec de bord d'attaque (1), dans le sens de l'envergure, ou sur le bord arrière (4) du bec de bord d'attaque (1) ou sur la face inférieure du bec de bord d'attaque (1).
